Europäisches Patentamt

European Patent Office

Office européen des brevets

(11) Veröffentlichungsnummer: **0 311 811 B1**

(12) **EUROPÄISCHE PATENTSCHRIFT**

(45) Veröffentlichungstag der Patentschrift: **15.04.92**

(21) Anmeldenummer: **88115098.1**

(22) Anmeldetag: **15.09.88**

(51) Int. Cl.⁵: $F16C\ 11/06$

(54) **Kugelzapfen-Zentralgelenk mit Dichtungsbalg für Dreieckslenker in Kraftfahrzeugen.**

(30) Priorität: **16.10.87 DE 3735089**

(43) Veröffentlichungstag der Anmeldung:
**19.04.89 Patentblatt 89/16**

(45) Bekanntmachung des Hinweises auf die
Patenterteilung:
**15.04.92 Patentblatt 92/16**

(84) Benannte Vertragsstaaten:
**ES FR GB IT SE**

(56) Entgegenhaltungen:
**EP-A- 0 093 937**
**DE-A- 3 417 225**
**DE-A- 3 439 972**

**LEMFÖRDER METALLWAREN AG**
**"Dreieckslenker Wartungs- frei", Ausgabe:**
**September 1977, 2844 Lemförde/Hann, Post-**
**fach 20 J RGEN ULDERUP & CO.**

(73) Patentinhaber: **LEMFOERDER METALLWAREN**
**AG.**
**Postfach 1220**
**W-2844 Lemförde(DE)**

(72) Erfinder: **Lustig, Wilfried**
**Osnabrücker Strasse 130**
**W-2844 Hüde(DE)**
Erfinder: **Bohne, Manfred**
**Kniepenort 99**
**W-2844 Ouernheim(DE)**

(74) Vertreter: **Bruse, Willy Hans Heinrich**
**Edisonstrasse 14**
**W-2800 Bremen 33(DE)**

Rank Xerox (UK) Business Services

## Beschreibung

Die Erfindung betrifft ein Kugelzapfen-Zentralgelenk mit Dichtungsbalg für Dreieckslenker in Kraftfahrzeugen mit Gattungsmerkmalen nach dem Oberbegriff des Patentanspruches 1.

Bekannt sind solche Gelenke aus dem Produktkatalog der Firma LEMFÖRDER METALLWAREN, Jürgen Ulderup AG. & Co., 2844 Lemförde, Ausgabe September 1977, Seite 490. Wegen der hohen Belastung solcher Zentralgelenke ist am Übergang des die Gelenkkugel tragenden Kugelzapfens in den sich radial erstreckenden Flansch zur Befestigung dieses Kugelzapfenkörpers eine Materialanhäufung vorgesehen, um die baulichen Abmessungen des Gelenks möglichst klein halten zu können. Der mit dem einen Ende außen am Gehäuse befestigte Dichtungsbalg ist mit dem anderen Ende in einer Nut des Kugelzapfenkörpers mittels eines Spannringes gehalten, wobei diese Nut im Bereich der Materialanhäufung angeordnet ist, so daß eine zusätzliche Verstärkung um das Maß der Nuttiefe erforderlich wird. Für diese Art der Befestigung des Dichtungsbalgs ist außerdem eine gewisse zusätzliche Bauhöhe erforderlich. Die Anordnung der Nut für die Befestigung des Dichtungsbalgs am Kugelzapfenkörper im Bereich der Materialanhäufung ist somit ungünstig.

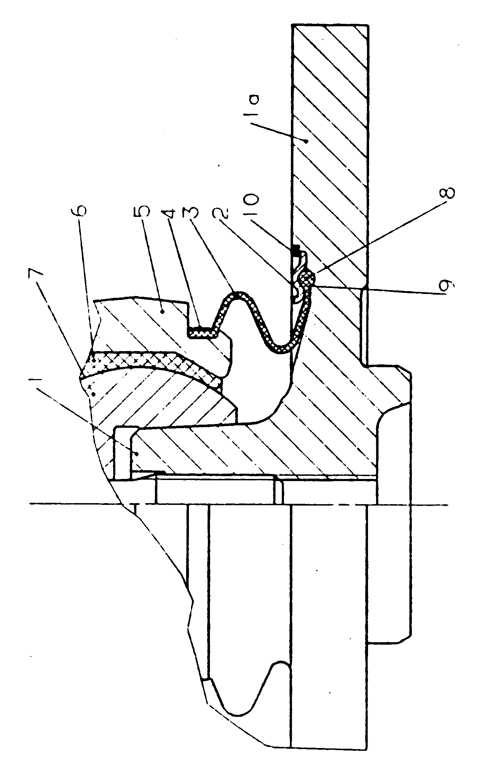

Eine Möglichkeit zur Vermeidung der Befestigung des Balges im Bereich der Materialanhäufung ist in der Figur 1 der DE-A-34 17 225 gezeigt. Der hier dargestellte Dichtungsbalg ist in einer Nut am Seitenrand eines sich radial zur Längsachse des Kugelzapfens erstreckenden Flansches befestigt, jedoch vergrößert dies die Bauhöhe und führt zu einem weiteren Bauteil.

Aufgabe der Erfindung ist die Schaffung eines KugelzapfenZentralgelenks, bei dem die Befestigung des Dichtungsbalges am Kugelzapfenkörper im Bereich der Materialanhäufung vermieden und die Bauhöhe des Gelenks weiter verringert wird.

Die Erfindung löst diese Aufgabe durch die Ausbildungsmerkmale nach dem Kennzeichen des Patentanspruches 1.

Gegenüber herkömmlichen Ausführungen ermöglicht diese Ausbildung einen wesentlich geringeren Abstand zwischen dem sich radial am Kugelzapfenkörper erstreckenden Flansch und der diesem zugewendeten Unterseite des Gehäuses, wodurch eine erhebliche Bauhöhenverringerung erreicht wird. Außerdem wird der Übergang des Flansches in den Kugelzapfenkörper nicht mehr durch eine Nut geschwächt. Die erfindungsgemäße Ausbildung hat außerdem den Vorteil, daß die Montage des Dichtungsbalgs im Gegensatz zur bisher üblichen Arbeitsweise ohne Montagehilfsvorrichtung erfolgen kann, denn die Befestigung des Dichtungsringes am Flansch erfolgt erst nach der Montage des Gelenks an einer frei zugänglichen Stelle.

Ein Ausführungsbeispiel der erfindungsgemäßen Ausbildung ist auf der Zeichnung teilweise in Seitenansicht und teilweise im Schnitt in einer Ebene der Kugelzapfenlängsachse dargestellt.

Bei dem Ausführungsbeispiel nimmt das Gehäuse 5 die in eine Gelenkschale 6 aus einem elastischen Werkstoff eingesetzte Gelenkkugel 7 auf. Diese Gelenkkugel 7 ist höhenverstellbar auf dem Kugelzapfenkörper 1 angeordnet, der nach unten in einen sich radial erstreckenden Flansch zur Befestigung des Kugelzapfenkörpers übergeht. Der Dichtungsbalg 3 ist mit dem einen Ende in einer Ausnehmung des Gehäuses 5 mittels einer Schelle 4, eines Spannringes oder dergleichen, befestigt. Das andere Ende des Dichtungsbalges 3 weist einen Kantenwulst 8 auf und ist in einer an der Oberfläche des Flansches 1a vorgesehenen Nut 9 befestigt. Diese Nut 9 ist außerhalb des Bereiches erhöhter Materialspannungskonzentrationen am Übergang des Flansches 1a in den Kugelzapfenkörper 1 vorgesehen. Der Kantenwulst 8 wird in der Nut 9 durch einen komplementär profilierten Blechring 2 gehalten, dessen Rand am Flansch 1a befestigt ist. Dazu eignen sich bekannte Mittel. Dargestellt ist eine Verstemmung 10 des Blechringes 2 an mehreren Stellen des Umfanges. Die Abmessungen der Nut 9 sind so gewählt, daß sie den Kantenwulst 8 und den profilierten Blechring 2 versenkt aufnimmt.

## Patentansprüche

1. Kugelzapfen-Zentralgelenk mit Dichtungsbalg für Dreieckslenker in Kraftfahrzeugen, bei dem der einerseits außen an einem die Gelenkkugel (7) in einer elastischen Gelenkschale (6) aufnehmenden Gehäuse (5) befestigte Dichtungsbalg (3) andererseits in einer Nut (9) am Kugelzapfenkörper (1) befestigt ist, der einen sich radial zur Längsachse erstreckenden Flansch (1a) mit Mitteln zur Befestigung am Dreieckslenker und einer Materialanhäufung am Übergang des Flansches in den Kugelzapfen (1) aufweist, dadurch gekennzeichnet, daß die Nut (9) zur Befestigung des Dichtungsbalgs (3) in dem sich radial erstreckenden Flansch (1a) des Kugelzapfenkörpers (1) außerhalb der am Übergang vorgesehenen Materialanhäufung angeordnet und der Dichtungsbalg (3) in der Nut (9) mittels eines im Querschnitt flachen Halteringes (2) befestigt ist, wobei der Dichtungsbalg (3) einen Kantenwulst (8) aufweist, den ein komplementäres Profil des Halteringes (2) überdeckt.

2. Kugelzapfen-Zentralgelenk nach Anspruch 1, dadurch gekennzeichnet, daß ein Haltering (2) aus Blech vorgesehen und dieser an mehreren Stellen seines Umfanges in der Nut (9) verstemmt (10) ist.

3. Kugelzapfen-Zentralgelenk nach den Ansprüchen 1 und 2, dadurch gekennzeichnet, daß der flache Blechring (2) versenkt in der Nut (9) im Flansch (1a) des Kugelzapfenkörpers (1) angeordnet ist.

## Claims

1. Central ball-and-socket joint with a sealing bellows for wishbones in motor vehicles, in which the sealing bellows (3), which is externally secured at one end to a housing (5), which holds the joint ball (7) in a resilient joint cup (6), is secured at the other end in a groove (9) in the ball pivot body (1), which comprises a flange (1a), which extends radially with respect to the longitudinal axis and has means for being secured to the wishbone, and a material accumulation at the point of transition from the flange to the ball pivot (1), characterised in that the groove (9) for securing the sealing bellows (3) in the radially extending flange (1a) of the ball pivot body (1) is arranged outside of the material accumulation provided at the point of transition, and the sealing bellows (3) is secured in the groove (9) by means of a retaining ring (2), which has a flat cross section, the sealing bellows (3) comprising an edge bead (8), which is covered by a complementary profile of the retaining ring (2).

2. Central ball-and-socket joint according to claim 1, characterised in that a retaining ring (2) of sheet metal is provided and is caulked (10) in the groove (9) at a plurality of points along its circumference.

3. Central ball-and-socket joint according to claims 1 and 2, characterised in that the flat sheet metal ring (2) is sunk in the groove (9) in the flange (1a) of the ball pivot body (1).

## Revendications

1. Articulation centrale à rotule comportant un soufflet d'étanchéité, pour des triangles de suspension de véhicules automobiles, dans laquelle le soufflet d'étanchéité (3) est fixé d'une part sur l'extérieur d'un carter (5) qui reçoit la rotule d'articulation (7) dans un coussinet d'articulation élastique (6), et d'autre part dans une rainure (9) pratiquée sur le corps de pivot d'articulation (1) qui présente une bride (1a) s'étendant radialement à l'axe longitudinal et dotée de moyens pour la fixation au triangle de suspension et d'une accumulation de matière à sa transition dans le pivot d'articulation (1), caractérisée en ce que la rainure (9), destinée à fixer le soufflet d'étanchéité (3) dans la bride radiale (1a) du corps de pivot d'articulation (1), est disposée en dehors de l'accumulation de matière prévue à la transition, et le soufflet d'étanchéité (3) est fixé dans la rainure (9) au moyen d'un anneau de blocage (2) de section plate, le soufflet d'étanchéité (3) présentant un bourrelet marginal (8) qui est recouvert par un profil complémentaire de l'anneau de blocage (2).

2. Articulation centrale à rotule selon la revendication 1, caractérisée en ce qu'il est prévu un anneau de blocage (2) en tôle, qui est maté (10) en plusieurs endroits de sa circonférence dans la rainure (9).

3. Articulation centrale à rotule selon la revendication 1 ou 2, caractérisée en ce que l'anneau plat en tôle (2) est encastré dans la rainure (9) de la bride (1a) du corps de pivot d'articulation (1).